# FASCICULE DE BREVET EUROPEEN

(11) **EP 0 622 259 B1**
(45) Date de publication et mention de la délivrance du brevet: **10.09.1997**
(21) Numéro de dépôt: 94400698.0
(22) Date de dépôt: 31.03.1994
(51) Int. Cl.: B60J 5/04

(54) **Cale destinée à être montée sur une barre de renfort de porte de véhicule automobile pour empêcher un claquement du panneau et/ou de la vitre de porte contre la barre**
Klotz für Verstärkungsstab einer Fahrzeugtür, um das Knallen von Fenster oder Paneel der Tür gegen den Stab zu verhindern
Support for stiffening beam of a vehicle door in order to avoid banging of the panel or window of the door against the said beam

(30) Priorité: 28.04.1993 FR 9305033
(43) Date de publication de la demande: 02.11.1994
(73) Titulaire: AUTOMOBILES PEUGEOT, 75116 Paris (FR); AUTOMOBILES CITROEN, 92200 Neuilly-sur-Seine (FR)
(72) Inventeur: Le Briz, Patrick, F-35230 Saint-Armel (FR)
(74) Mandataire: Robert, Jean-François

(56) Documents cités:
- EP-A- 0 057 270
- FR-A- 2 232 461
- FR-A- 2 279 603
- US-A- 3 829 149
- US-A- 3 868 141

## Description

La présente invention concerne une cale destinée à être montée sur une barre de renfort de porte de véhicule automobile.

On assiste actuellement à une généralisation de l'utilisation de barres de renfort intégrées dans les portes avant et arrière de véhicules automobiles pour améliorer la sécurité de ces véhicules lors de chocs latéraux.

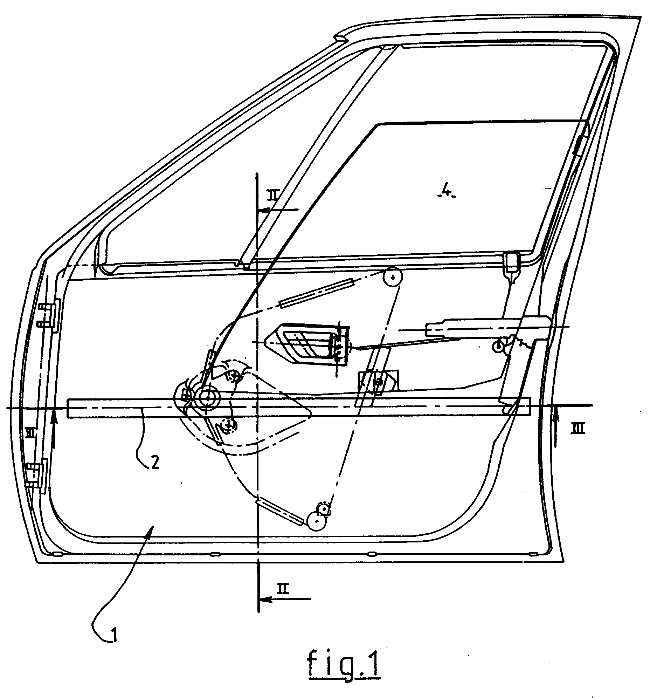

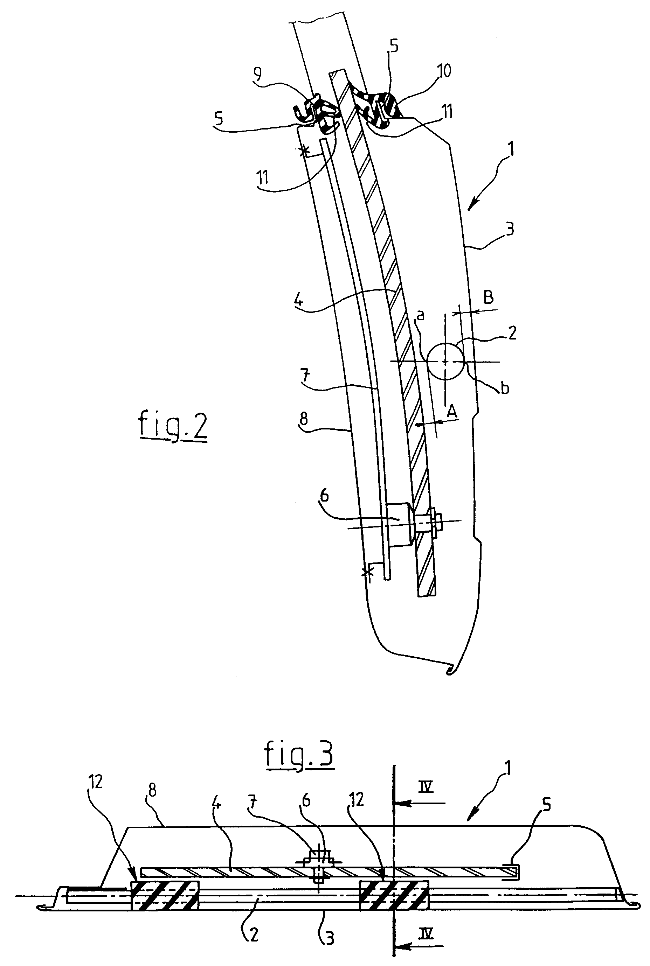

La figure 2, qui est une vue en section suivant la ligne II-II de la porte de la figure 1, montre que la porte 1 est équipée d'une barre de renfort 2 s'étendant longitudinalement au véhicule et se trouvant entre le panneau extérieur 3 de la porte et la vitre 4 de celle-ci.

Généralement, le panneau extérieur 3 est réalisé à partir d'une tôle d'une épaisseur d'environ 0,8 mm et la vitre 4, représentée en position basse, est guidée dans son déplacement entre des feuillures 5 par un chariot 6 associé à un rail lève-vitre 7 solidaire d'une doublure de porte 8. Des éléments lècheurs respectivement intérieur 9 et extérieur 10 à lèvres 11 contactent de part et d'autre la vitre 4.

Lors de la fermeture de la porte 1, en particulier lors d'un mouvement de fermeture particulièrement violent de celle-ci, la vitre mobile 4, notamment lorsqu'elle est abaissée, et le panneau extérieur 3 peuvent taper contre la barre de renfort 2 aux points indiqués en a et b à cause de la compressibilité des lèvres 11 des éléments lècheurs 9, 10 autorisant une amplitude de déplacement de la vitre 4 de la valeur A et de la rigidité insuffisante du panneau extérieur 3 autorisant une amplitude de déplacement de celui-ci de la valeur B.

Une solution pour résoudre le problème de claquement résultant du choc de la vitre mobile 4 et/ou du panneau extérieur 3 contre la barre de renfort 2 lors d'une fermeture violente de la porte 1, consiste à utiliser un cordon longitudinal de mastic gonflant entre le panneau extérieur 3 et la barre de renfort 2 pour immobiliser le panneau extérieur 3 et une cale à base de mousse adhérisée sur la barre de renfort à l'endroit a où se produit le choc entre vitre et barre de renfort.

Cependant, cette solution connue n'est pas aisée à mettre en oeuvre surtout dans le cas d'assemblage en série des portes de véhicules automobiles.

Le document FR-A-2279603 décrit un élément de renfort pour porte de véhicule automobile comportant une barre de renfort se présentant sous la forme d'un profilé creux pourvu d'au moins deux appuis qui s'appuient chacun par une surface d'appui sur la paroi à renforcer (c'est-à-dire le panneau extérieur de porte) et qui maintiennent le profilé creux écarté de cette surface d'appui.

Un tel montage empêche le claquement du panneau contre la barre au niveau des appuis puisque ceux-ci maintiennent la barre écartée du panneau. Cependant, le problème du claquement n'est pas entièrement résolu. En effet, ces appuis servent essentiellement à fixer la barre sur le panneau et, comme il n'y en a généralement qu'un à chaque extrémité, il se pourrait, dans le cas d'une barre de grande longueur, que le panneau vienne claquer contre le milieu de la barre lorsqu'on ferme brutalement la porte. De plus, ce document ne prévoit aucun moyen pour empêcher le claquement contre la vitre.

La présente invention résout ce problème grâce à une cale selon la revendication 1.

D'autres aspects de l'invention sont mentionnés dans les revendications dépendantes 2 à 18.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
- la figure 1 représente une porte d'un véhicule automobile vue de l'intérieur ;
- la figure 2 est une vue en section suivant la ligne II-II de la figure 1 ;
- la figure 3 est une vue en coupe suivant la ligne III-III de la figure 1 et représentant une porte de véhicule automobile équipée de deux cales conformes à l'invention ;
- la figure 4 est une vue en section suivant la ligne IV-IV de la figure 3 et représentant un premier mode de réalisation de la cale conforme à l'invention;
- la figure 5 est une vue semblable à celle de la figure 4 et représentant un second mode de réalisation de la cale conforme à l'invention ;
- la figure 6 est une vue de dessus suivant la flèche VI de la figure 5 ;
- la figure 7 est une vue semblable à celle de la figure 4 et représentant un troisième mode de réalisation de la cale conforme à l'invention ;
- la figure 8 est une vue semblable à celle de la figure 4 et représentant un quatrième mode de réalisation de la cale conforme à l'invention ; et
- la figure 9 est une vue semblable à celle de la figure 4 et représentant un cinquième mode de réalisation de la cale conforme à l'invention.

En se référant à la figure 3 où les éléments identiques à ceux des figures 1 et 2 portent les mêmes références, deux cales 12 conformes à l'invention sont montées sur la barre de renfort 2 et sont chacune agencée de façon à empêcher le claquement du panneau extérieur 3 et/ou de la vitre mobile 4 sur la barre 2.

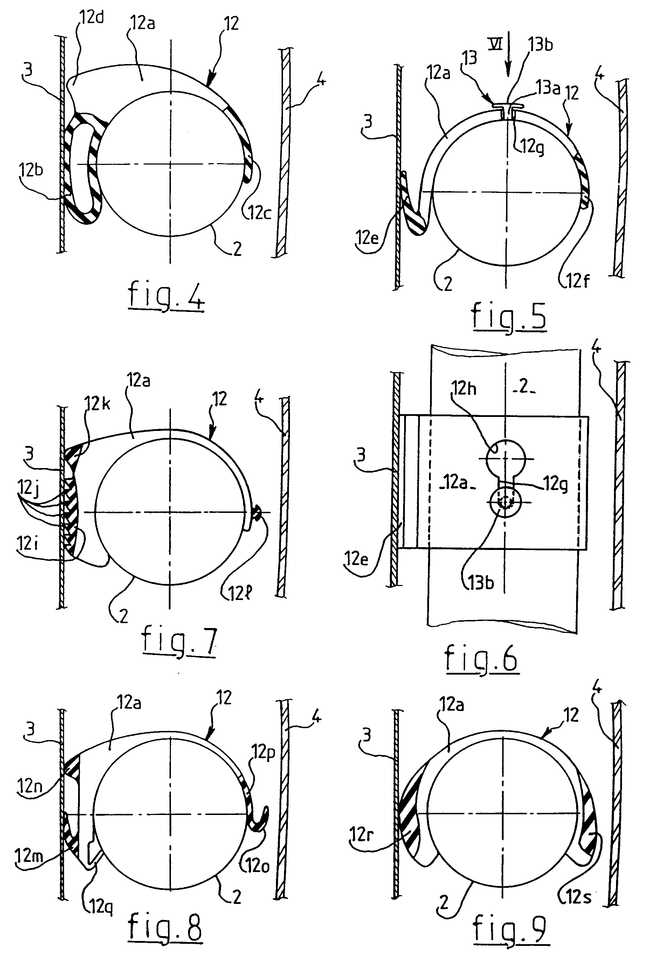

Les cales 12 des différents modes de réalisation représentées aux figures 4 à 9 présentent la caractéristique commune d'être réalisées en une matière à base de caoutchouc comprenant une partie rigide 12a en contact avec la barre 2 de section circulaire sur une longueur de circonférence déterminée suivant le mode de réalisation considéré et au moins une partie souple solidaire de la partie rigide 12a et pouvant venir en contact avec le panneau extérieur 3 ou la vitre mobile 4.

Selon le mode de réalisation représenté en figure 4, la cale 12 comprend une partie tubulaire en matériau souple 12b solidaire de la partie rigide 12a, en appui contre le panneau extérieur 3 de façon à former un moyen de maintien en position de la cale 12 relativement à la barre 2 et pouvant s'écraser entre le panneau 3 et la barre 2. La partie 12b constitue ainsi également le moyen pour éviter le claquement du panneau 3 contre la barre 2. La cale 12 comprend de plus une partie souple 12c solidaire de la partie rigide 12a en continuant cette dernière et constituant le moyen pour empêcher le claquement de la vitre 4 contre la barre 2. Les parties 12a, 12b et 12c sont en contact avec la barre 2 sur une longueur supérieure à la demi-circonférence de celle-ci de façon à constituer un moyen pour empêcher le déchaussage de la cale chaussée sur la barre 2. La cale 12 comprend également une lèvre 12d en matériau rigide de la partie 12a en contact avec le panneau extérieur 3 de façon à immobiliser en rotation la cale 12 relativement à la barre 2 lors du roulage du véhicule. On notera que la partie tubulaire 12b assure déjà elle-même en partie l'immobilisation en rotation de la cale 12.

Selon le second mode de réalisation représenté aux figures 5 et 6, la cale 12 comprend une lèvre en matériau souple 12e prolongeant la partie rigide 12a et en contact avec le panneau extérieur 3 pour assurer le maintien en position de la cale 12 relativement à la barre 2 et éviter le claquement du panneau 3 contre cette barre. La cale 12 comprend également une partie souple 12f prolongeant la partie rigide 12a et empêchant le claquement de la vitre 4 contre la barre 2. La partie rigide 12a et la partie souple 12f contactent la barre 2 sur une distance inférieure ou égale à la demi-circonférence de cette barre. Pour empêcher le déchaussage de la cale 12, il est prévu un pion 13 solidaire de la barre 2 et dont la tige 13a passe à travers une rainure 12g réalisée dans la partie rigide 12a de la cale 12. Le pion 13 comporte également une tête 13b s'étendant sur une distance supérieure à la largeur de la rainure 12g prolongeant un orifice 12h de la partie rigide 12a et de diamètre supérieur à celui de la tête 13b du pion 13 de façon à permettre le passage de la tige 13a au travers de la partie 12a de la cale 12. La rainure 12g est orientée longitudinalement par rapport à la barre 2 de façon à constituer avec la tige 13a du pion 13 des moyens d'immobilisation en rotation de la cale 12.

Selon le troisième mode de réalisation représenté en figure 7, la partie rigide 12a de la cale 12 est en contact avec la barre 2 sur une longueur supérieure à la demi-circonférence de cette barre pour constituer ainsi un moyen empêchant le déchaussage de la cale 12. Cette dernière comprend une partie souple 12i solidaire de la partie rigide 12a et en contact avec le panneau extérieur 3 pour à la fois maintenir en position la cale 12 relativement à la barre 2 et éviter le claquement du panneau 3 contre la barre 2. La partie souple 12i comporte des stries 12j contactant le panneau 3, participant à la fonction antibruit et assurant également la fonction de moyens d'immobilisation en rotation de la cale 12. Celle-ci comporte également une lèvre souple 12k en contact avec le panneau 3 et contribuant également à l'immobilisation en rotation de la cale 12 qui comporte enfin un pion en matériau souple 12l solidaire de la partie rigide 12a à l'opposé de la partie souple 12i et destiné à empêcher le claquement de la vitre 4 contre la barre 2.

La cale 12 du quatrième mode de réalisation représenté en figure 8 comprend une lèvre en matériau souple 12m solidaire de la partie rigide 12a et en contact avec le panneau extérieur 3 pour assurer le maintien en position de la cale 12 par rapport à la barre 2 et éviter le claquement du panneau 3 contre cette barre. La cale 12 comprend également une seconde lèvre en matériau souple 12n solidaire de la partie rigide 12a et en contact avec le panneau extérieur 3 de façon à immobiliser en rotation la cale 12 relativement à la barre 2. Pour empêcher le claquement de la vitre 4 contre la barre 2, la cale 12 comprend une troisième lèvre en matériau souple 12o réalisée dans une partie souple 12p prolongeant la partie rigide 12a. Cette dernière et la partie souple 12p contactent la barre 2 sur une distance inférieure ou égale à la moitié de la circonférence de cette barre. Pour empêcher le déchaussage de la cale 12, la partie rigide 12a de celle-ci comporte une lèvre en matériau rigide 12q, située sensiblement sous la lèvre 12m et en appui sur la barre 2 en un emplacement situé à une distance de l'autre extrémité supérieure à la demi-circonférence de la barre 2.

Le cinquième mode de réalisation tel que représenté à la figure 9 montre que la cale 12 comprend deux masses opposées de matière souple 12r et 12s surmontant la partie rigide 12a qui contacte la barre 2 sur une longueur supérieure à la demi-circonférence de cette barre pour empêcher le déchaussage de la cale 12. La masse de matière souple 12r contacte le panneau extérieur 3 pour assurer le maintien en position de la cale 12 relativement à la barre 2 et éviter également le claquement du panneau 3 contre la barre 2. La masse 12r assure en plus l'immobilisation en rotation de la cale 12 sur la barre 2 lors du roulage du véhicule. La masse de matière souple 12s empêche le claquement de la vitre 4 contre la barre 2.

La cale conforme à l'invention permet ainsi d'empêcher efficacement le claquement du panneau extérieur et/ou de la vitre, en position abaissée, contre la barre de renfort longitudinale d'une porte de véhicule automobile. Cette cale se monte facilement sur la barre de renfort sans nécessiter d'outillage particulier et peut être aisément réalisée en une seule pièce par moulage. Bien entendu, chaque barre de renfort peut comporter plusieurs cales anti-bruits conformes à l'invention pour éliminer au maximum tout claquement.

## Revendications

1. Cale destinée à être montée sur une barre de renfort (2) de porte de véhicule automobile, la barre (2) se trouvant entre un élément tel que le panneau extérieur (3) de la porte (1) et un autre élément tel que la vitre (4), notamment lorsque celle-ci est abaissée, caractérisée en ce qu'elle comprend des moyens de maintien en position relativement à la barre (2) et des moyens pour empêcher le claquement du panneau (3) et de la vitre (4) contre la barre (2), cette cale comprenant d'une part une partie rigide (12a) destinée à être mise en contact avec la barre (2) et d'autre part au moins une partie souple solidaire de la partie rigide (12a) et apte à venir en contact avec le panneau (3) et une partie souple solidaire de la partie rigide (12a) et apte à venir en contact avec la vitre (4), lesdites parties souples constituant respectivement des moyens pour empêcher le claquement du panneau (3) et des moyens pour empêcher le claquement de la vitre (4) contre la barre (2).

2. Cale selon la revendication 1, caractérisée en ce que les moyens de maintien comprennent des moyens d'appui contre le panneau.

3. Cale selon la revendication 2, caractérisée en ce que les moyens d'appui comprennent ladite partie souple apte à venir en contact avec le panneau (3).

4. Cale selon la revendication 3, caractérisée en ce que ladite partie souple est en tonne de lèvre (12e ; 12m) apte à prendre appui sur le panneau (3).

5. Cale selon la revendication 3 ou 4, caractérisée en ce que les moyens d'appui comprennent, sur ladite partie souple (12i), des stries (12j) aptes à venir en contact avec le panneau (3).

6. Cale selon la revendication 3, caractérisée en ce que ladite partie souple (12b) est tubulaire et apte à s'écraser entre le panneau (3) et la barre (2).

7. Cale selon l'une des revendications précédentes, caractérisée en ce que, lorsqu'elle est chaussée sur la barre (2), les moyens de maintien comprennent des moyens pour empêcher le déchaussage.

8. Cale selon la revendication 7, caractérisée en ce qu'elle est en contact avec la barre (2), lorsque celle-ci est de section circulaire, sur une longueur supérieure à la demi-circonférence de la barre (2), constituant ainsi les moyens pour empêcher le déchaussage.

9. Cale selon la revendication 7, caractérisée en ce qu'elle est en contact avec la barre (2), lorsque celle-ci est de section circulaire, sur une distance inférieure ou égale à la demi-circonférence de la barre (2) et les moyens pour empêcher le déchaussage comprennent un pion (13) solidaire de la barre (2) dont la tige (13a) passe à travers une rainure (12g) ménagée dans la cale (12) et dont la tête (13b) s'étend sur une distance supérieure à la largeur de la rainure (12g).

10. Cale selon la revendication 7, caractérisée en ce qu'elle est en contact avec la barre (2), lorsque celle-ci est de section circulaire, sur une distance inférieure ou égale à la moitié de la circonférence de la barre (2) et les moyens pour empêcher le déchaussage comprennent une lèvre en matériau rigide (12q) apte à venir en appui sur la barre (2).

11. Cale selon l'une des revendications précédentes, caractérisée en ce que les moyens de maintien précités comprennent des moyens d'immobilisation en rotation.

12. Cale selon la revendication 11, caractérisée en ce que les moyens d'immobilisation en rotation comprennent au moins une lèvre en matériau souple ou rigide (12d ; 12k ; 12n) apte à venir en contact avec le panneau (3).

13. Cale selon les revendications 9 et 11, caractérisée en ce que la rainure (12g) est orientée longitudinalement par rapport à la barre (2) de façon à constituer avec la tige (13a) du pion (13) les moyens d'immobilisation en rotation.

14. Cale selon la revendication 11 considérée en combinaison avec la revendication 5, caractérisée en ce que les moyens d'immobilisation en rotation sont constitués par les stries (12j) précitées.

15. Cale selon l'une des revendications précédentes, caractérisée en ce que ladite partie souple (12c ; 12f) apte à venir en contact avec la vitre (4) est en continuité avec la partie rigide (12a) de la cale (12).

16. Cale selon l'une des revendications 1 à 14, caractérisée en ce que ladite partie souple apte à venir en contact avec la vitre (4) est un pion en matériau souple (12*l*) fixé sur la partie rigide (12a) de la cale (12).

17. Cale selon l'une des revendications 1 à 14, caractérisée en ce que ladite partie souple apte à venir en contact avec la vitre (4) se présente sous la forme d'une lèvre en matériau souple (12o) solidaire de la partie rigide (12a) de la cale (12).

18. Cale selon l'une des revendications 1 à 3, caractérisée en ce que l'une ou l'autre desdites parties souples se présente sous la forme d'une masse de matière souple (12r ; 12s) surmontant la partie rigide (12a) de la cale (12).

## Claims

1. Chock intended to be mounted on a reinforcement bar (2) of a motor vehicle door, the bar (2) being located between a member such as the outer panel (3) of the door (1) and another member such as the window (4), particularly when the latter is lowered, characterised in that it comprises means for holding it in position relative to the bar (2) and means for preventing the banging of the panel (3) and the window (4) against the bar (2), this chock comprising on the one hand a rigid portion (12a) intended to be placed in contact with the bar (2) and on the other hand at least one flexible portion integral with the rigid portion (12a) and capable of coming into contact with the panel (3) and one flexible portion integral with the rigid portion (12a) and capable of coming into contact with the window (4), said flexible portions constituting respectively means for preventing the banging of the panel (3) and means for preventing the banging of the window (4) against the bar (2).

2. Chock according to Claim 1, characterised in that the holding means comprise means for bearing against the panel.

3. Chock according to Claim 2, characterised in that the bearing means comprise said flexible portion capable of coming into contact with the panel (3).

4. Chock according to Claim 3, characterised in that said flexible portion is in the form of a lip (12e; 12m) capable of bearing against the panel (3).

5. Chock according to Claim 3 or 4, characterised in that the bearing means comprise, on said flexible portion (12i), ribs (12j) capable of coming into contact with the panel 3).

6. Chock according to Claim 3, characterised in that said flexible portion (12b) is tubular and capable of being crushed between the panel (3) and the bar (2).

7. Chock according to one of the preceding claims, characterised in that, when it is fitted on the bar (2), the holding means comprise means for preventing it from being removed.

8. Chock according to Claim 7, characterised in that it is in contact with the bar (2), when this has a circular section, over a length greater than half the circumference of the bar (2), thus constituting the means for preventing it from being removed.

9. Chock according to Claim 7, characterised in that it is in contact with the bar (2), when this has a circular section, over a distance less than or equal to half the circumference of the bar (2) and the means for preventing it from being removed comprise a pin (13) integral with the bar (2), the stem (13a) of which passes through a groove (12g) made in the chock (12) and the head of which (13b) extends over a distance greater than the width of the groove (12g).

10. Chock according to Claim 7, characterised in that it is in contact with the bar (2), when this has a circular section, over a distance less than or equal to half the circumference of the bar (2) and the means for preventing it from being removed comprise a lip made of rigid material (12q) capable of bearing against the bar (2).

11. Chock according to one of the preceding claims, characterised in that the aforementioned holding means comprise means for immobilisation in rotation.

12. Chock according to Claim 11, characterised in that the means for immobilisation in rotation comprise at least one lip made of flexible or rigid material (12d; 12k; 12n) capable of coming into contact with the panel (3).

13. Chock according to Claims 9 and 11, characterised in that the groove (12g) is oriented longitudinally in relation to the bar (2) so as to constitute, together with the stem (13a) of the pin (13) the means for immobilisation in rotation.

14. Chock according to Claim 11 considered in combination with Claim 5, characterised in that the means for immobilisation in rotation are constituted by the aforementioned ribs (12j).

15. Chock according to one of the preceding claims, characterised in that said flexible portion (12c; 12f) capable of coming into contact with the window (4) is continuous with the rigid portion (12a) of the chock (12).

16. Chock according to one of Claims 1 to 14, characterised in that said flexible portion capable of coming into contact with the window (4) is a pin made of flexible material (12*l*) fixed to the rigid portion (12a) of the chock (12).

17. Chock according to one of Claims 1 to 14, characterised in that said flexible portion capable of coming into contact with the window (4) takes the form of a lip made of flexible material (12o) integral with the rigid portion (12a) of the chock (12).

18. Chock according to one of Claims 1 to 3, characterised in that one or other of said flexible portions takes the form of a mass of flexible material (12r; 12s) surmounting the rigid portion (12a) of the chock (12).

## Patentansprüche

1. Klotz zum Anbringen auf einem Verstärkungsstab (2) einer Fahrzeugtür, wobei der Stab (2) sich zwischen einem Element, wie beispielsweise dem Außenpaneel (3) der Tür (2) und einem weiteren Element, wie beispielsweise der Scheibe (4) befindet, insbesondere, wenn diese abgesenkt ist, dadurch gekennzeichnet, daß er Positionshalteeinrichtungen bezüglich des Stabes (2) und Einrichtungen aufweist, um das Knallen des Paneels (3) und der Scheibe (4) gegen den Stab (2) zu verhindern, wobei der Klotz einerseits einen starren Abschnitt (12a), der dazu dient in Kontakt mit dem Stab (2) zu kommen, und andererseits wenigstens einen nachgiebigen Abschnitt aufweist, der mit dem starren Abschnitt (12a) verbunden ist, und in der Lage ist, mit dem Paneel (3) in Kontakt zu kommen, und einen nachgiebigen Abschnitt aufweist, der mit dem starren Abschnitt (12a) verbunden ist, und in der Lage ist, in Kontakt mit der Scheibe (4) zu kommen, wobei die nachgiebigen Abschnitte Einrichtungen zum Verhindern des Knallens des Paneels (3) bzw. Einrichtungen zum Verhindern des Knallens der Scheibe (4) gegen den Stab (2) bilden.

2. Klotz nach Anspruch 1, dadurch gekennzeichnet, daß die Halteeinrichtungen Andruckeinrichtungen gegen das Paneel aufweisen.

3. Klotz nach Anspruch 2, dadurch gekennzeichnet, daß die Andruckeinrichtungen den nachgiebigen Abschnitt aufweisen, der in der Lage ist, in Kontakt mit dem Paneel (3) zu kommen.

4. Klotz nach Anspruch 3, dadurch gekennzeichnet, daß der nachgiebige Abschnitt in Form einer Lippe (12e; 12m) ausgebildet ist, die in der Lage ist, in Andruck gegen das Paneel (3) zu kommen.

5. Klotz nach Anspruch 3 oder 4, dadurch gekennzeichnet, daß die Andruckeinrichtungen am nachgiebigen Abschnitt (12i) Rillen (12j) aufweisen, die in der Lage sind, in Kontakt mit dem Paneel (3) zu kommen.

6. Klotz nach Anspruch 3, dadurch gekennzeichnet, daß der nachgiebige Abschnitt (12b) rohrförmig ist und in der Lage ist, sich zwischen dem Paneel (3) und dem Stab (2) einzudrücken.

7. Klotz nach einem der vorhergehenden Ansprüche, dadurch gekennzeichnet, daß wenn er auf dem Stab (2) aufgebracht ist, die Halteeinrichtungen Einrichtungen zum Verhindern des Lösens aufweisen.

8. Klotz nach Anspruch 7, dadurch gekennzeichnet, daß er in Kontakt mit dem Stab (2) ist, wenn dieser von kreisförmigem Querschnitt ist, auf einer Länge, die größer ist als der halbe Umfang des Stabes (2), wobei so die Einrichtungen zum Verhindern des Lösens bzw. Abziehens gebildet werden.

9. Klotz nach Anspruch 7, dadurch gekennzeichnet, daß er in Kontakt mit dem Stab (2) ist, wenn dieser von kreisförmigem Querschnitt ist, über eine Strecke, die geringer oder gleich dem halben Umfang des Stabes (2) ist, und die Einrichtungen zum Verhindern des Lösens einen Zapfen (13) aufweisen, der mit dem Stab (2) verbunden ist, dessen Stange (13a) sich durch eine Kerbe (12g) erstreckt, die in dem Klotz (12) ausgebildet ist, und deren Kopf (13b) sich über eine Strecke erstreckt, die größer ist als die Breite der Kerbe (12g).

10. Klotz nach Anspruch 7, dadurch gekennzeichnet, daß er in Kontakt mit dem Stab (2) ist, wenn dieser von kreisförmigem Querschnitt ist, über eine Strecke, die geringer oder gleich der Hälfte des Umfangs des Stabes (2) ist, und die Einrichtungen zum Verhindern des Lösens eine Lippe aus starrem Material (12q) aufweisen, die in der Lage ist, in Anlage gegen den Stab (2) zu kommen.

11. Klotz nach einem der vorhergehenden Ansprüche, dadurch gekennzeichnet, daß die vorgenannten Halteeinrichtungen Drehfestlegungseinrichtungen aufweisen.

12. Klotz nach Anspruch 11, dadurch gekennzeichnet, daß die Drehfestlegungseinrichtungen wenigstens eine Lippe aus nachgiebigem oder starrem Material (12d; 12k; 12n) aufweisen, die in der Lage ist, in Kontakt mit dem Paneel (3) zu kommen.

13. Klotz nach den Ansprüchen 9 und 11, dadurch gekennzeichnet, daß die Kerbe (12g) längs bezüglich des Stabes (2) ausgerichtet ist, derart, daß sie mit der Stange (13a) des Zapfens (13) die Drehfestlegungs- bzw. -verhinderungseinrichtungen bilden.

14. Klotz nach Anspruch 11 in Zusammenhang mit Anspruch 5, dadurch gekennzeichnet, daß die Drehfestlegungseinrichtungen durch die vorgenannten Rillen (12j) gebildet werden.

15. Klotz nach einem der vorhergehenden Ansprüche, dadurch gekennzeichnet, daß der nachgiebige Abschnitt (12c; 12f), der in der Lage ist, in Kontakt mit der Scheibe (4) zu kommen, in Kontinuität mit dem starren Abschnitt (12a) des Klotzes (12) steht.

16. Klotz nach einem der Ansprüche 1 bis 14, dadurch gekennzeichnet, daß der nachgiebige Abschnitt, der in der Lage ist, in Kontakt mit der Scheibe (4) zu kommen, ein Zapfen aus nachgiebigem Material (12l) ist, der am starren Abschnitt (12a) des Klotzes (12) befestigt ist.

17. Klotz nach einem der Ansprüche 1 bis 14, dadurch gekennzeichnet, daß der nachgiebige Abschnitt, der in der Lage ist, in Kontakt mit der Scheibe (4) zu kommen, in Form einer Lippe aus nachgiebigem Material (12o) ausgebildet ist, verbunden mit dem starren Abschnitt (12a) des Klotzes (12).

18. Klotz nach einem der Ansprüche 1 bis 3, dadurch gekennzeichnet, daß der eine oder der andere der nachgiebigen Abschnitte in Form einer Masse aus nachgiebigem Material (12r; 12s) vorliegt, die den starren Abschnitt (12a) des Klotzes (12) übersteigt.
